# EUROPEAN PATENT SPECIFICATION

(11) **EP 3 333 535 B1**
(45) Date of publication and mention of the grant of the patent: **31.10.2018**
(21) Application number: 16757089.4
(22) Date of filing: 14.01.2016
(51) Int. Cl.: G01B 15/00, A43D 1/06, G01N 23/046

(54) **METHOD OF MEASURING THE INTERNAL VOLUME OF AN OBJECT**
VERFAHREN ZUR MESSUNG DES INNENVOLUMENS EINES OBJEKTS
PROCÉDÉ POUR MESURER LE VOLUME INTÉRIEUR D'UN OBJET

(43) Date of publication of application: 13.06.2018
(73) Proprietor: Everbright Innovations Limited, Hong Kong (CN)
(72) Inventor: CHERNIK, Mikhail Valerievich, St.Petersburg 196070 (RU); GAVRILYUK, Sergey Alekseyevich, St.Petersburg 196135 (RU); BORODIN, Dmitry Vladimirovich, St.Petersburg 194021 (RU); LEBEDEV, Oleg Aleksandrovich, St.Petersburg 190068 (RU); LAVRINOVICH, Andrey Aleksandrovich, Minsk 220136 (BY); NAZVIN, Nikolay Yuryevich, St.Petersburg 195274 (RU); CHERNIK, Valery Grigorievich, St.Petersburg 196128 (RU)
(74) Representative: Sloboshanin, Sergej
(86) International application number: PCT/RU2016/000003
(87) International publication number: WO 2017/123111

(56) References cited:
- EP-A1- 0 605 294
- EP-A2- 0 588 664
- DE-A1- 4 438 993
- DE-A1-102006 036 692
- US-A1- 2008 004 833

## Description

The invention relates to the field of measuring methods, namely to a method of measuring the interior volume of an object, in which the object is contactlessly scanned using a computer tomographic scanner, the scanning results are used for an automatised construction of a three-dimensional model of the interior volume of the object, and the interior volume of the object is measured using computer processing of the obtained three-dimensional model.

The invention is used to obtain an exact three-dimensional model of the interior volume of any non-metallic object comprising metallic elements.

### PRIOR ART

A method of measuring the interior volume of an object is known which uses laser scanning systems with special laser scanners. The use of laser scanning for measuring the interior volume of an object requires the placement of the scanner head inside the object, and also sufficient volume for it to move. See: http://www.nikon.com/products/instruments/lineup/industrial/3d metrology/3d scanne r/lc
During this rotational movement the interior surface of the object is measured, and subsequently all images are combined and the construction of a three-dimensional model of the interior volume of the object is carried out. A shortcoming of laser scanning is the impossibility of scanning an open contour of the interior volume of the object, and also the necessity of a sufficient amount of volume within the object to be measured for the scanner head to move. Moreover the operation is labour-intensive and cannot be fully automatised.

Moreover to measure the interior volume of an object, contactless scanning using special range finders can be employed, which combine optical and infrared objectives (see http://wikipedia-info.ru/dalnomer/). A particular shortcoming of this method is that it is practically impossible to place the objective of the range finder inside the entire object and, as a consequence, the very poor quality of the obtained three-dimensional model of the interior volume of the object.

Another method of measuring the interior volume of an object is a method of filling that interior volume with a hardening material, subsequently destroying the object to be measured and obtaining a cast of the interior volume of the object for the construction of a three-dimensional model of the interior volume of the object by a contactless as well as an instrumental measuring method.

Also, a method of direct scanning of the interior volume of an object using a computer tomographic scanner is known. The method of non-destructive layered inspection of the interior structure of an object was suggested in 1972 by Godfrey Hounsfield and Allan Cormack, who jointly received the Nobel Prize for this discovery. The method is based on contactless measuring and subsequent computer processing of the difference in attenuation of the x-ray radiation of materials differing in density.

On each of the images all materials of the object are represented by different brightness values of the image defined on the basis of their density. For a visual and computational evaluation of the density of the materials of the object visualised by the method of computer tomography a scale of attenuation of the x-ray radiation is used, which was given the name Hounsfield scale. Its visualised reflection on a monitor device is a black and white image spectrum. The scope of units of the scale ("densitometric indices" - Hounsfield units) corresponding to a level of attenuation of the x-ray radiation for instance by anatomical structures of the organism ranges from -1024 to +3071, i.e. 4096 degrees of attenuation. The mean indicator in the Hounsfield scale (0 HU) corresponds to the density of water, negative figures of the scale correspond to gases, for instance air, positive ones correspond to denser substances such as for instance plastics, glass, and metals.

In the images obtained after scanning, all materials have different imaged brightness values. Since the interior volume of the object is filled with air, it is visible as the brightest. After scanning a compilation of computer files in DICOM format is obtained, in which the results are registered. For the construction of the three-dimensional model of the interior volume of the object a software is used that is provided for work with three-dimensional objects. By putting on the obtained images different light density filters and filters rendering it possible to combine indestructible objects, a three-dimensional model of the interior volume of the object is obtained. Based on the obtained three-dimensional model the interior volume of the object is measured. Practically all geometrical parameters of this volume can be measured in any unit system.

The shortcoming of the prior art is:
- the impossibility of measuring the interior volume of objects having an open contour of the interior volume (open volume),
- the impossibility of accurately measuring the interior volume of non-metallic objects comprising metallic elements and other substances causing the occurrence of artefacts (foreign matter) on the model to be constructed. The scanning of non-metallic objects comprising various metallic construction elements results in an occurrence such as a luminescence around the metallic parts. This luminescence is visible on the obtained images as artefacts in the shape of geometrical forms such as mushrooms, circles, pyramids etc. These artefacts are interferences making it difficult to accurately measure the interior volume,
- the impossibility of an automatised detection of the interior volume of an object in the presence of the above-mentioned artefacts. These artefacts can only be removed manually in a subsequent inspection, and this operation carries the danger of changing the geometry of the initial three-dimensional models themselves.

A method of measuring the interior volume of an object is known from US 2008/0004833 A1, wherein the method measures shoes in a non-destructive manner using a computer tomographic scanner. The interior volume of the object is filled with a filler before scanning, the filler being a reusable filler. The radiodensity of the filler differs from the radiodensity of the object.

Further, EP 0 605 294 A1 relates to the construction of volumes located inside a solid, which may be concealed or difficult to access, having a shape which must be accurately known and on which digital computations are to be performed.

Also, DE 10 2006 036692 A1, DE 44 38 993 A1 and EP 0 588 664 A2 are considered to be relevant for the state of the art.

### DISCLOSURE OF THE INVENTION

Based on the foregoing, the task underlying the invention is the creation of a method of measuring the interior volume of an object providing an automatised creation of a three-dimensional model of the interior volume of a non-metallic object comprising metallic elements according to claim 1. The interior volume of the object is filled with a filler before scanning, the filler being a reusable filler, and the radiodensity of the filler differing from the radiodensity of the object.

Preferred embodiments of the invention are defined by the dependent claims.

The essence of the invention lies in the use of the specially selected reusable filler to fill the interior volume of a non-metallic object comprising metallic elements and the subsequent joint scanning of the object with the filler in a computer tomographic scanner. "Reusable filler" in this application means a filler which can be easily withdrawn from the object after the measurement has been carried out and used in subsequent measurements. As a result of the scanning, a collection of digital three-dimensional models for all materials of different radiodensity is obtained, which together with the selection of filler makes it possible to automatically obtain an exact three-dimensional model of the interior volume of the object without damaging the object itself. According to the present invention quartz sand is used as the filler. The choice of quartz sand as the filler allows a clear separation of the exterior three-dimensional models of the objects from the three-dimensional models of their interior volume.

In each image all materials of the object and of the filler are represented by different brightness values of the image, determined on the basis of their density. The selection of the filler material for the interior volume is carried out so that the density of the object and the density of the filler are represented in the obtained images by non-overlapping brightness values, that is, different attenuation values of the x-ray radiation. Such a selection of filler material then makes it possible to exclude everything except the filler itself in the reconstructed three-dimensional model and to automatically detect the interior volume of the object to be measured.

In a preferred embodiment of the invention, modified quartz sand is used as a filler. Modified quartz sand in this application means sand with additional ingredients, for instance solutions, which make it possible to fixate the initially given shape. By means of this modified sand the interior volume of the object can be completely filled, even if it comprises lateral and/or bottom apertures through which sand would simply fall out, thus changing the boundaries of the interior volume of the object to be measured.

In another preferred embodiment of the invention the open contour of the interior volume of the object is limited by at last one plug before filling the interior volume of the object with the filler, wherein the at least one plug can hold the filler within the boundaries of the interior volume of the object. This makes it possible to accurately measure the interior volume of an object with an open contour of a complex shape.

### SHORT DESCRIPTION OF THE DRAWINGS

- Fig. 1: shows the outline of the object to be measured,
- Fig. 2: shows the object to be measured in longitudinal section,
- Fig. 3: shows a collection of plastic goods having a complex interior shape, as an example of embodiment of the invention,

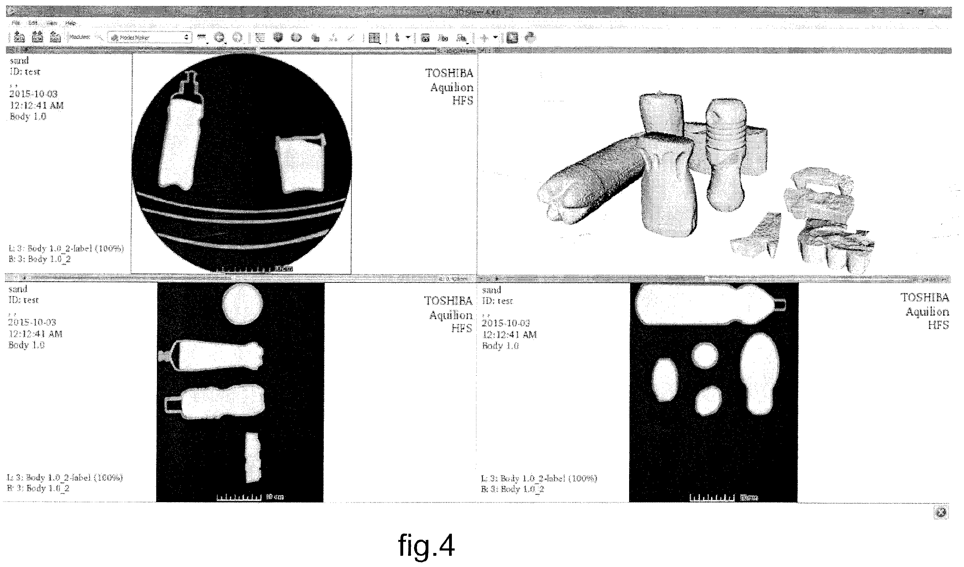

- Fig. 4: shows the obtained digital images,

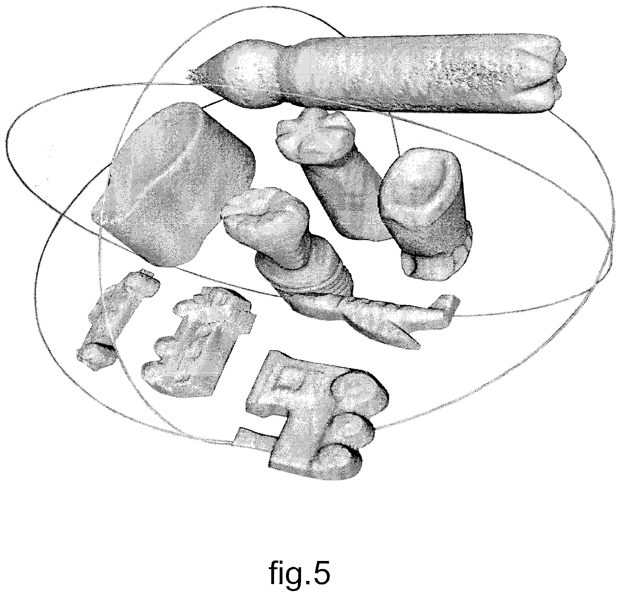

- Fig. 5: shows the obtained three-dimensional digital models of the interior volume of the objects to be measured.

### EMBODIMENT OF THE INVENTION

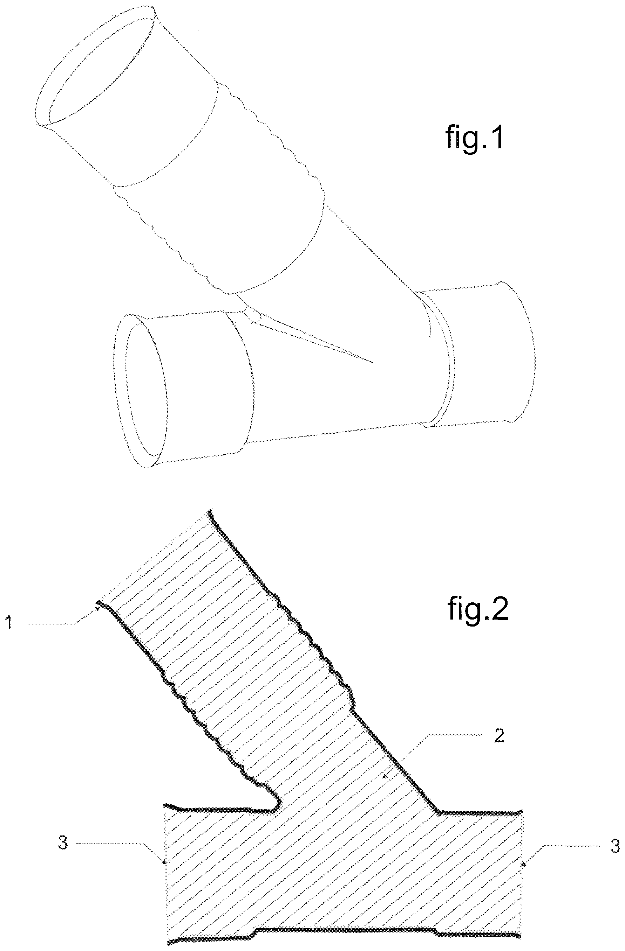

Fig. 1 shows a plastic branch pipe whose interior volume is subject to measurement. Fig. 2 shows the same branch pipe in longitudinal section. It is well visible that the branch pipe in longitudinal section has an exterior contour made of the material 1 of the branch pipe, while in the connection places of the branch pipe the contour of the interior volume of the branch pipe is open. To carry out the measurement of the interior volume of the branch pipe its open contour is limited by at least one plug 3, subsequently the interior volume of the branch pipe is filled with the filler 2, and the branch pipe is contactlessly scanned using a computer tomographic scanner. After the contactless scanning the filler is withdrawn from the interior volume without destroying the branch pipe, and the scanning results are used to construct a three-dimensional model of the branch pipe, on the basis of which the interior volume of the branch pipe is measured.

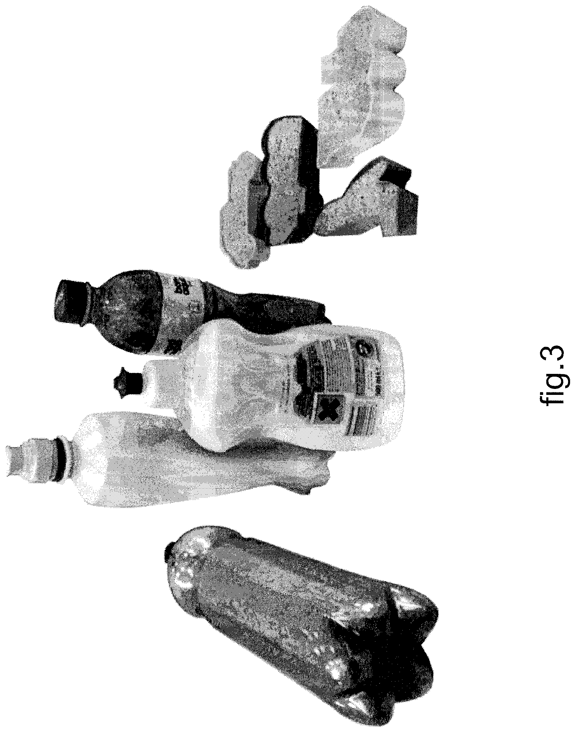

An example of the embodiment of the invention was also realised for measuring the interior volume of plastic goods of complex interior shape (Fig. 3).

Quartz sand was used as filler. The choice of filler material was based on the difference in the radiodensities of the plastic (from -800 HU to +200 HU) and the quartz sand (from +500 HU to +2000 HU), which made it possible to unambiguously distinguish between the exterior three-dimensional models of the objects and the three-dimensional models of their interior volume when using a computer tomographic scanner.

The plastic objects selected for the experiments were filled with quartz sand using a vibrating table, which rendered it possible to prevent the occurrence of air entrapments in the places where the filler contacts the interior surface of the objects to be measured. When objects with an open contour of the interior volume (open volume) are measured, elastic containers with quartz sand are used as plugs. If necessary, a correctional forming of the surface in the open places was carried out by means of the elastic containers with modified sand.

After filling the objects with sand, scanning was carried out on a medical computer tomographic scanner from the company Toshiba (see http://medical.toshiba.com/products/ct/aquilion-one-family/scalable-technology.php). These installations allow to carry out a three-dimensional measurement of the interior volume with a very high resolution. Additionally they make it possible to measure several objects arranged on a tray of 1750 mm in length at once.

Scanning schedule on the Toshiba Aquilion 32 tomographic scanner:
- voltage: 120 kV (exactly),
- current: 50 mA increasing to 95 mA on the lying bottle,
- matrix: 512 x 512 (exactly),
- field of view (FOV): 37.6 x 37.6 cm (exactly),
- thickness of the scanning section: 5 mm (exactly),
- thickness of the reconstruction section: 1 mm (exactly).

Hounsfield scale figures:
- lying bottle: 530-750 HU (approximately)
- round standing bottle: 830-870 HU (approximately)
- oval-shaped container: 780-850 HU (approximately)
- round standing bottle with thread: 780-950 HU (approximately)
- oval standing bottle with thread: 800-940 HU (approximately)
- "Aeroplane" mould: 900-930 HU (approximately)
- "Locomotive" mould: 970-1020 HU (approximately)
- "Lorry" mould: 1000-1100 HU (approximately)
- "Passenger car" mould: 900-970 HU (approximately).

The scanning resulted in a compilation of computer files in DICOM format. Their subsequent processing renders three-dimensional digital models of the interior volume of the objects.

Also in the process of scanning objects with such a filling of the interior volumes a three-dimensional image of the object was obtained that lacks artefacts from metallic elements, constructively included in the objects as "mushrooms", circle-type formations and the like. The lack of artefacts allows avoidance of manual correction of the models and offers the possibility to automatise the subsequent computer processing. To this end, the scanning results were fed into a software for work with three-dimensional objects adding density filters (more than 400 and less than 1400) and combining integral elements. As a result, complete three-dimensional digital models of the interior volume of the measured objects were obtained.

### INDUSTRIAL APPLICABILITY

The inventive method can be widely applied in different fields of industry in which the exact measurement of the interior volume of an object without destruction of the object to be measured is critical.

The inventive method can mainly be applied in an automatised control of the dimensions of the interior volume of objects in manufacturing but also in the automatised measuring and control of the interior volume of shoes.

## Claims

1. Method of measuring the interior volume of a non-metallic object comprising metallic elements, in which:
- the interior volume of the object is filled with a filler (2), wherein the filler (2) is a reusable filler,
- the object is contactlessly scanned using a computer tomographic scanner,
- the scanning results are used for an automatised construction of a three-dimensional model of the interior volume of the object, and
- the interior volume of the object is measured using computer processing of the obtained three-dimensional model,
**characterised in that**
the radiodensity of the filler (2) differs from the radiodensity of the object, wherein in order to avoid artefacts from metallic elements on the image of the object quartz sand is used as the filler (2).

2. Method according to claim 1, **characterised in that** modified quartz sand is used as the filler (2), wherein the modified quartz sand is a quartz sand with additional ingredients, which allows to fixate an initially given shape.

3. Method according to any of the preceding claims, **characterised in that** before filling the interior volume of the object with filler (2) the open contour of the interior volume of the object is limited by at least one plug (3), wherein the at least one plug (3) is adapted to hold the filler within the boundaries of the interior volume of the object, wherein elastic containers with quartz sand or with modified quartz sand are used as plugs (3).

4. Method according to one of the preceding claims, **characterised in that** the interior volume of the object is filled with a filler (2) using a vibrating table.

5. Application of the method according to any of the preceding claims for measuring the interior volume of shoes.

## Patentansprüche

1. Verfahren zur Messung des Innenvolumens eines nichtmetallischen Objekts umfassend metallische Elemente, bei dem:
- das Innenvolumen des Objekts mit einem Füllmaterial (2) gefüllt wird, wobei das Füllmaterial (2) ein wiederverwendbares Füllmaterial ist,
- das Objekt unter Verwendung eines computertomografischen Scanners kontaktlos gescannt wird,
- die Scanergebnisse für die automatisierte Erstellung eines dreidimensionalen Modells des Innenvolumens des Objekts verwendet werden, und
- das Innenvolumen des Objekts mittels Computerbearbeitung des erhaltenen dreidimensionalen Modells gemessen wird,
**dadurch gekennzeichnet, dass**
die Röntgendichte des Füllmaterials (2) sich von der Röntgendichte des Objekts unterscheidet, wobei zur Vermeidung von Artefakten durch metallische Elemente auf dem Abbild des Objekts Quarzsand als Füllmaterial (2) verwendet wird.

2. Verfahren nach Anspruch 1, **dadurch gekennzeichnet, dass** modifizierter Quarzsand als Füllmaterial (2) verwendet wird, wobei der modifizierte Quarzsand ein Quarzsand mit weiteren Zusätzen ist, wodurch eine ursprüngliche Form fixiert werden kann.

3. Verfahren nach einem der vorhergehenden Ansprüche, **dadurch gekennzeichnet, dass** vor der Befüllung des Innenvolumens des Objekts mit einem Füllmaterial (2) die offene Kontur des Innenvolumens des Objekts durch wenigstens einen Pfropfen (3) begrenzt wird, wobei der wenigstens eine Pfropfen (3) dazu vorgesehen ist, das Füllmaterial innerhalb der Begrenzungen des Innenvolumens zu halten, wobei elastische Behälter mit Quarzsand oder modifiziertem Quarzsand als Pfropfen (3) verwendet werden.

4. Verfahren nach einem der vorhergehenden Ansprüche, **dadurch gekennzeichnet, dass** das Innenvolumen des Objekts mit einem Füllmaterial (2) unter Verwendung eines Rütteltisches gefüllt wird.

5. Verwendung des Verfahrens nach einem der vorhergehenden Ansprüche zur Messung des Innenvolumens von Schuhen.

## Revendications

1. Procédé de mesure du volume intérieur d'un objet non métallique comprenant des éléments métalliques, dans lequel :
- le volume intérieur de l'objet est rempli avec une charge (2), dans lequel la charge (2) est une charge réutilisable,
- l'objet est balayé sans contact en utilisant un scanner tomographique informatisé,
- les résultats de balayage sont utilisés pour une construction automatisée d'un modèle tridimensionnel du volume intérieur de l'objet, et
- le volume intérieur de l'objet est mesuré en utilisant un traitement informatisé du modèle tridimensionnel obtenu,
**caractérisé en ce que**
la radio-opacité de la charge (2) diffère de la radio-opacité de l'objet, dans lequel, afin d'éviter des artefacts provenant d'éléments métalliques sur l'image de l'objet, du sable de quartz est utilisé comme la charge (2).

2. Procédé selon la revendication 1, **caractérisé en ce que** du sable de quartz modifié est utilisé comme la charge (2), dans lequel le sable de quartz modifié est un sable de quartz avec des ingrédients additionnels, ce qui permet de fixer une forme initialement donnée.

3. Procédé selon l'une quelconque des revendications précédentes, **caractérisé en ce que**, avant le remplissage du volume intérieur de l'objet avec la charge (2), le contour ouvert du volume intérieur de l'objet est limité par au moins un obturateur (3), dans lequel l'au moins un obturateur (3) est adapté à maintenir la charge à l'intérieur des limites du volume intérieur de l'objet, dans lequel des récipients élastiques avec du sable de quartz ou avec du sable de quartz modifié sont utilisés comme obturateurs (3).

4. Procédé selon l'une des revendications précédentes, **caractérisé en ce que** le volume intérieur de l'objet est rempli avec une charge (2) en utilisant une table vibrante.

5. Application du procédé selon l'une quelconque des revendications précédentes pour mesurer le volume intérieur de chaussures.
